# EUROPÄISCHE PATENTSCHRIFT

(11) **EP 3 909 878 B1**
(45) Veröffentlichungstag und Bekanntmachung des Hinweises auf die Patenterteilung: **10.08.2022**
(21) Anmeldenummer: 20174043.8
(22) Anmeldetag: 12.05.2020
(51) Int. Cl.: B65B 51/14, B65B 29/02, B65B 65/00, B65B 11/28, B29C 65/18, B29C 65/78, B65D 85/804, B29C 65/00, B29L 31/00, B65D 85/808

(54) **VORRICHTUNG ZUM HERSTELLEN EINES IN EINER UMHÜLLUNG AUFGENOMMENEN BEUTELS**
DEVICE FOR MANUFACTURING A BAG ACCOMMODATED IN AN ENVELOPE
DISPOSITIF DE FABRICATION D'UNE POCHETTE REÇUE DANS UNE ENVELOPPE

(43) Veröffentlichungstag der Anmeldung: 17.11.2021
(73) Patentinhaber: Teepack Spezialmaschinen GmbH & Co. KG, 40667 Meerbusch (DE)
(72) Erfinder: RYDLEWSKI, Thomas, 40470 Düsseldorf (DE); ANOKHIN, Sergey, 51469 Bergisch Gladbach (DE); BALTES, Klaus, 50127 Bergheim (DE); LAMBERTZ, Stefan, 50354 Hürth (DE); KNOPS, Hans, 47839 Krefeld (DE)
(74) Vertreter: Grünecker Patent- und Rechtsanwälte PartG mbB

(56) Entgegenhaltungen:
- WO-A1-2009/101686
- WO-A1-2012/117308
- DE-A1- 2 334 701
- US-A- 2 083 124
- US-A1- 2007 186 509

## Beschreibung

Die vorliegende Erfindung betrifft eine Vorrichtung zum Herstellen einer Verpackungseinheit, die einen ein brühfähiges Material enthaltenden Beutel umfasst, der in einer üblicherweise aromadichten Umhüllung vorgesehen ist.

Eine gattungsgemäße Vorrichtung mit den oberbegrifflichen Merkmalen ist aus EP 2 231 479 B1 bekannt. Bei dieser vorbekannten Vorrichtung wird der Beutel zunächst in einer Umhüllungsstation zwischen einander gegenüberliegende Schenkel einem als ebene Bahn zugeführten Umhüllungsmaterial gelegt, indem der Beutel auf die Bahn gelegt und diese um den Beutel gefaltet und von zu einemzugeführten Umhüllungsmaterial abgeschnitten wird, sodass ein Umhüllungsmaterialstück vorgefertigter Länge den Beutel in sich aufnimmt. Durch das Falten des Umhüllungsmaterials wird ein Rand der Umhüllung des Beutels bereits gebildet. Es besteht allerdings die Notwendigkeit, eine U-förmig ausgebildete Siegelnaht zu formen, sodass die Umhüllung umfänglich um den Beutel herum geschlossen ist und sich eine aromadichte Verpackung des brühfähigen Materials innerhalb des Beutels ergeben kann.

Bei diesem brühfähigen Material handelte sich in der Regel um Tee oder anderes aufgussfähiges Material aus getrocknetem Pulver oder Blättern, dessen Qualität und Geschmack durch Umwelteinflüsse beeinträchtigt werden kann, sodass die zuvor erwähnte aromadichte Verpackung notwendig sein kann. Dies gilt auch für die vorliegende Erfindung.

Das Ausbilden der U-förmigen Siegelnaht erfolgt bei dem zuvor erwähnten Stand der Technik über eine Siegeleinrichtung, die an der Außenumfangsfläche eines Karussells eine Vielzahl von Siegeleinheiten aufweist, die jeweils für sich gegeneinander verschwenkbare Siegelbacken aufweisen, die die Umhüllung zusammen mit dem Beutel empfangen und im Rahmen einer schrittweisen Drehbewegung des Karussells geschlossen werden, um während der Drehbewegung des Karussells die U-förmigen Ränder der Umhüllung durch Schweißen zu versiegeln und die so geschlossene Umhüllung an einer anderen Station abzugeben.

Dieser Ausgestaltung liegt die Überlegung zugrunde, dass im Verhältnis zu anderen Stationen der vorbekannten Vorrichtung das Einsiegeln des Beutels in der Umhüllung durch Ausbilden von Schweißnähten eine größere Verweildauer in der Siegelstation benötigt, als in den vorherigen Stationen. So können die einzelnen Arbeitsschritte in der Siegelstation durch Drehung des Karussells zeitlich aufgeteilt werden, ohne die Taktung der gesamten Vorrichtung zu unterbrechen oder zu stören.

Für das effektive Einsiegeln der Umhüllung insbesondere im Wege des Verschweißens ist es erforderlich, die Umhüllung mit ihren Rändern zwischen die Siegelbacken zu bringen, die Siegelbacken gegen die Umhüllung anzulegen, eine hinreichende Wärmemenge in die Umhüllung einzubringen, um diese jedenfalls so anzuschmelzen, dass die gegeneinander liegenden Bahnen der Umhüllung aufschmelzen und miteinander verschweißen. Diese Siegelung ist aufgrund der eingebrachten Wärme und der notwendigen Kühlzeit noch nicht unmittelbar formsteif, so dass die Verpackungseinheit bestehend aus dem Beutel und der Umhüllung üblicherweise erst dann weiter verarbeitet werden kann, wenn eine gewisse Kühlzeit eingehalten wurde.

Da die Vorrichtung zur Herstellung der Verpackungseinheit eine Einrichtung für die Massenherstellung von Verbrauchsmaterialien ist, kommt es auf eine schnelle Taktung und eine wirtschaftliche Herstellung der Verpackungseinheit an.

Die vorliegende Erfindung will die vorbekannte Vorrichtung insofern verbessern und insbesondere eine Siegelstation angeben, die ein schnelleres Einsiegeln des Beutels in der Umhüllung erlaubt. Hierzu schlägt die vorliegende Erfindung eine Vorrichtung mit den Merkmalen von Anspruch 1 vor.

Das Dokument WO 2012/117308 A1 offenbart eine Vorrichtung mit der Merkmale des Oberbegriffs des Anspruchs 1.

Die erfindungsgemäße Vorrichtung umfasst in an sich bekannter Weise eine Beutelherstellungseinrichtung. Diese muss sich nicht von der in EP 2 231 479 B1 beschriebenen Beutelherstellungseinrichtung unterscheiden. Sie kann aber alternativ auch gemäß EP 2 626 318 A1, EP 1 479 612 A1, EP 2 572 996 A1 oder EP 1 153 833 A1 ausgebildet sein. Dabei kann die Beutelherstellungseinrichtung so ausgebildet sein, dass zusammen mit dem Beutel auch ein Faden mit diesem verbunden wird, dessen anderes Ende mit einem Etikett versehen ist, wie dies beispielsweise aus EP 2 231 479 B1 bekannt ist.

Die erfindungsgemäße Vorrichtung hat ferner eine Siegelstation, um den Beutel gegebenenfalls zusammen mit dem Faden und dem Etikett in eine Umhüllung einzuschließen. Diese Siegelstation ist üblicherweise so ausgebildet, dass der Beutel aromadicht in der Umhüllung aufgenommen ist. Die Umhüllung ist als solches beispielsweise aus DE 296 09 717 U1 bekannt. Auch bei der dort beschriebenen Ausgestaltung wird die Umhüllung durch Einschlagen des Beutels gegebenenfalls zusammen mit dem Faden und dem Etikett geformt, wobei diese Einheit aus der Umhüllung und dem Beutel zur Ausbildung einer U-förmigen Naht gesiegelt wird. Dazu kann die Siegelstation die einander gegenüberliegenden Lagen der Umhüllung mittels Schweißen verbinden. Aber auch andere Arten der Verbindung wie beispielsweise das Rändeln oder Verkleben sind denkbar. Diese Verbindungsarten können auch in Kombination aufgebracht werden.

Bei der erfindungsgemäßen Siegelstation hat zumindest eine Siegelbacke, üblicherweise jede der beiden Siegelbacken, ein erstes und ein zweites Siegelbackenelement. Jedes der Siegelbackenelemente einer einzigen Siegelbacke ist zur Ausbildung einer der Längssiegelungen und eines Teilstücks der Quersiegelung ausgebildet. Üblicherweise sind zwei Siegelbackenelemente vorgesehen, die in Kombination eine U-förmige, nahezu geschlossene Siegelfläche ausbilden und die von einer Seite gegen das Umhüllungsmaterial angelegt werden, um einander gegenüberliegende und durch eine Falz getrennte Schenkel der Folienbahn gegeneinander anzulegen und zwischen den beiden Siegelbacken zu pressen. So ist die durch das einzelne Siegelbackenelement ausgebildete Siegelfläche, die an der Umhüllung zum Siegel anliegt, bevorzugt L-förmig.

Im Gegensatz zu dem Stand der Technik ist bei der erfindungsgemäßen Lösung jede einzelne auf einer Seite der entsprechenden Umhüllung vorgesehene Siegelbacke zumindest zweiteilig, bevorzugt exakt zweiteilig ausgebildet. Das erste und das zweite Siegelbackenelement können in unterschiedlicher Richtung auf die Umhüllung zu- und von der Umhüllung wegbewegt werden. So kann ein Zwischenraum zum Einbringen der Umhüllung zum Versiegeln derselben und zur Entnahme der versiegelten Verpackungseinheit auf andere Weise als im Stand der Technik erzeugt werden, bei welcher dieser Freiraum durch Verschwenken der beiden Siegelbacken gebildet wird.

Bei der erfindungsgemäßen Lösung kann das erste und das zweite Siegelbackenelemente jeder einzelnen Siegelbacke translatorisch und/oder rotatorisch bewegt werden, um den entsprechenden Freiraum zu bilden. Insbesondere können die beiden Siegelbackenelemente voneinander beabstandet werden, um dazwischen die Umhüllung einzubringen. Bei geöffneten Siegelbacken wird dabei üblicherweise bereits eine Annäherung der ersten und zweiten Siegelbackenelemente erfolgen, nachdem die Umhüllung mit dem Beutel dazwischen zwischen die sich im Wesentlichen gegenüberliegenden ersten Siegelbackenelemente einer oberen und einer unteren Siegelbacke und zweiten Siegelbackenelemente der oberen und unteren Siegelbacke vorgesehen ist. Soweit vorliegend auf die obere und untere Siegelbacke abgestellt wird, erfolgt dies vornehmlich zur Unterscheidbarkeit der einzelnen Komponenten der Siegelbacken. Obere und untere Siegelbacken schließen zwischen sich beim Siegeln die Umhüllung ein. Die ersten und zweiten Siegelbackenelemente können jeweils an der oberen und an der oberen Siegelbacke vorgesehen sein. Das erste, zweite sowie gegebenenfalls ein drittes oder viertes Siegelbackenelement befindet sich dementsprechend beim Siegeln auf einer Seite der Umhüllung.

Bevorzugt sind Gestaltungen, bei denen sowohl auf der Oberseite als auch auf der Unterseite der Umhüllung eine identische Gestaltung der Siegelbacken verwirklicht ist.

Die Siegelbackenelemente sind bevorzugt L-förmig ausgeformt, wobei ein Schenkel die Siegelfläche für die Längssiegelung verwirklicht und ein anderer Schenkel ein Teilstück der Siegelfläche für die Quersiegelung ausbildet. Beim Siegeln stoßen die beiden, die Teilstücke der Quersiegelung ausbildenden Schenkel üblicherweise gegeneinander bzw. liegen eng aneinander an, so dass trotz der Aufteilung der Siegelbacken in ein erstes und ein zweites Siegelbackenelement eine kontinuierlich von einer Ecke zu der anderen Ecke durchlaufenden Quersiegelung erzeugt werden kann.

Die erfindungsgemäße Lösung bietet dementsprechend den Vorteil einer raschen und damit ökonomischen Siegelung der Umhüllung. Die Umhüllung kann schneller in den Freiraum zwischen die Siegelbacken eingebracht, dort gesiegelt und nach dem Siegeln aus dem Freiraum entnommen werden.

Wird beispielsweise die Umhüllung über ein sich drehendes Transportrad in eine Siegelposition verbracht, in welcher die Siegelbacken das Umhüllungsmaterial zwischen sich verpressen, so kann der die Grundfläche der um den Beutel gefalteten Umhüllung aufnehmende Freiraum durch beabstandete erste und zweite Siegelbackenelemente auf der Oberseite und der Unterseite gebildet sein. Bereits bei Annäherung an die Siegelposition werden die jeweiligen Siegelbackenelemente aufeinander zu bewegt, so dass diese zwischen sich das Umhüllungsmaterial einnehmen und schließlich am Ende der Zustellbewegung zur Vervollständigung einer U-förmigen Siegelfläche nicht nur miteinander zusammenwirken, sondern auch das Umhüllungsmaterial zwischen sich zu verpressen. Das Transportrad und die Siegelstation werden in der Regel mit der Taktung der Beutelherstellungseinrichtung betrieben.

Bevorzugt werden die jeweiligen Siegelbackenelemente verschwenkbar gelagert, wozu ein Siegelbacken-Schwenkarm vorgesehen ist, der das erste oder das zweite Siegelbackenelement trägt. Die Schwenkachse dieses Siegelbacken-Schwenkarms erstreckt sich schräg zu den Längs- und Quersiegelungen und dementsprechend quer zu den zuvor bereits erwähnten Stegen der L-förmigen Siegelfläche. Bevorzugt ist diese Schrägstellung so, dass die Schwenkachse exakt in einem Winkel von 45° zu den üblicherweise rechtwinklig zueinander vorgesehenen Längs- und Quersiegelungen verläuft. Der Winkel kann allerdings um +/- 15°, bevorzugt +/- 10°, besonders bevorzugt +/- 5° von dieser bevorzugten Ausrichtung abweichen.

Der Siegelbacken-Schwenkarm kann über ein durch die Schwenkachse vermitteltes Drehmoment angetrieben sein. So kann der Siegelbacken-Schwenkarm an der Welle eines Motors angeordnet sein, die die Schwenkachse vorgibt.

Die Schrägstellung der Schwenkachse bewirkt, dass sich die beiden Schenkel der L-förmigen Siegelbackenelemente jeweils beim Verschwenken sowohl von der Längskante wie auch der Querkante der Umhüllung entfernen. Die Längskante wird dabei durch die sich gegenüberliegenden Längsränder der Schenkel gebildet, wohingegen die Querkante üblicherweise rechtwinklig dazu verläuft und gegenüberliegend zu der Falz vorgesehen ist. Im Hinblick auf eine gute Kinematik ist es zu bevorzugen, die Schwenkachse in Bezug auf eine Siegelebene, in welcher die Umhüllung in der Siegelposition angeordnet ist, versetzt vorzusehen. Während die Siegelfläche beim Siegeln sich üblicherweise parallel zu einer die Schwenkachse enthaltenden Ebene erstreckten, liegt die Schwenkachse deutlich versetzt zu dieser Ebene.

Der Siegelbacken-Schwenkarm ist üblicherweise im Wesentlichen L-förmig ausgestaltet, wobei ein Ende des Siegelbacken-Schwenkarms verschwenkbar um die Schwenkachse gelagert ist und das andere Ende das zugeordnete Siegelbackenelement trägt. Zwischen diesen beiden Enden greift üblicherweise ein Pleuel an, welches in der Regel gelenkig mit dem Schwenkarm verbunden ist. Der Pleuel wird über eine Antriebswelle angetrieben, zu der der Pleuel exzentrisch angeordnet ist. Der Pleuel ist dabei wie üblich frei drehbar um einen Exzenter der Antriebswelle gelagert. Die Antriebswelle verläuft üblicherweise parallel zu der Schwenkachse, da über die Antriebswelle nicht nur der Siegelbacken-Schwenkarm angetrieben wird, sondern auch ein Gegenbacken-Schwenkarm, der mit einem der ersten bzw. zweiten Siegelbackenelemente zusammenwirkt und zusammen mit diesem Siegelbackenelement und Siegelung des Umhüllungsmaterials bewirkt. Auch dieser Gegenbacken-Schwenkarm ist verschwenkbar gelagert, allerdings im Hinblick auf eine gegenläufige Schwenkbewegung beim Antrieb der Antriebswelle an einer in Bezug auf die Gelenkpunkte der Pleuel gegenüberliegenden Seite. Die der Siegelbacke zugeordnete Schwenkachse, im Folgenden Siegelbacken-Schwenkachse genannt, nimmt dementsprechend zwischen der anderen Schwenkachse, im Folgenden Gegenbacken-Schwenkachse genannt, und sich die Angriffspunkte der Pleuel ein.

Bei der zuvor beschriebenen bevorzugten Ausgestaltung, bei welcher jede Siegelbacke durch zwei L-förmig gebildete Backenelemente ausgeformt ist, hat die Vorrichtung bevorzugt zwei Antriebswellen, denen jeweils eine Antriebseinheit als Motor zugeordnet ist. Jede der beiden Antriebswellen hat dementsprechend einen eigenständigen Antrieb. Bei diesem Antrieb handelt es sich bevorzugt um einen Servomotor.

Die jeweilige Antriebswelle ist zum Antrieb jeweils eines der Siegelbackenelemente und eines der Gegenbackenelemente vorgesehen. Bei diesem Gegenbackenelement handelt es sich um dasjenige Gegenbackenelement, welches mit dem entsprechenden Siegelbackenelement zur Verpressung der Umhüllung zusammenwirkt. Eine einzige Antriebswelle ist danach bevorzugt dem oberen und dem unteren Backenelement zugeordnet und stellt diese aufeinander zu, so dass die beiden Backenelemente, d. h. das Siegelbackenelement und das Gegenbackenelement durch die einzige Antriebswelle synchronisiert bewegt werden. Die zweite Antriebswelle stellt in gleicher Weise das andere Paar der Backenelemente, die zwischen sich die Umhüllung verpressen. Jede Antriebswelle verläuft parallel zu den Schwenkachsen der der Antriebswelle zugeordneten Siegelbacken- und Gegenbacken-Schwenkarme.

Die beiden Antriebswellen sind bevorzugt rechtwinklig zueinander ausgerichtet. Entsprechendes gilt für die den jeweiligen Paaren zugeordneten Schwenkachsen, von denen bevorzugt vier vorgesehen sind, um jeweils das Siegelbackenelement und das Gegenbackenelement des ersten Paares aufeinander zu und voneinander weg verschwenkbar zu lagern und in gleicher Weise das Siegelbackenelement und das Gegenbackenelement des zweiten Paares verschwenkbar zu lagern.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine Seitenansicht wesentlicher Teile eines Ausführungsbeispiels einer Vorrichtung zum Herstellung eines umhüllten Beutels;
- Figur 2: die in Figur 1 gezeigte Beutelherstellungseinrichtung in vergrößerter Darstellung beim Ausschieben von Beutel und Folie;
- Figur 3: eine perspektivische Draufsicht der Siegelstation des Ausführungsbeispiels nach Figur 1 bei geöffneten Siegelbacken;
- Figur 4: eine Draufsicht des Ausführungsbeispiels der Siegelstation rechtswinklig zu der Drehachse des Transportrades nach Figur 2 in der in Figur 2 verdeutlichten Phase;
- Figur 5: eine Seitenansicht der Siegelstation in der in den Figuren 2 und 3 verdeutlichten Phase;
- Figur 6: die Siegelstation bei einer Draufsicht auf die Siegelbacken beim Siegeln;
- Figur 7: eine Ansicht gemäß Figur 2 beim Siegeln der Umhüllung;
- Figur 8: eine Darstellung gemäß Figur 3 in der Phase nach Figur 7;
- Figur 9: eine Darstellung nach Figur 4 in der Phase gemäß den Figuren 5 und 6, und
- Figur 10: eine Draufsicht auf eine Verpackungseinheit bestehend aus Beutel und Folie.

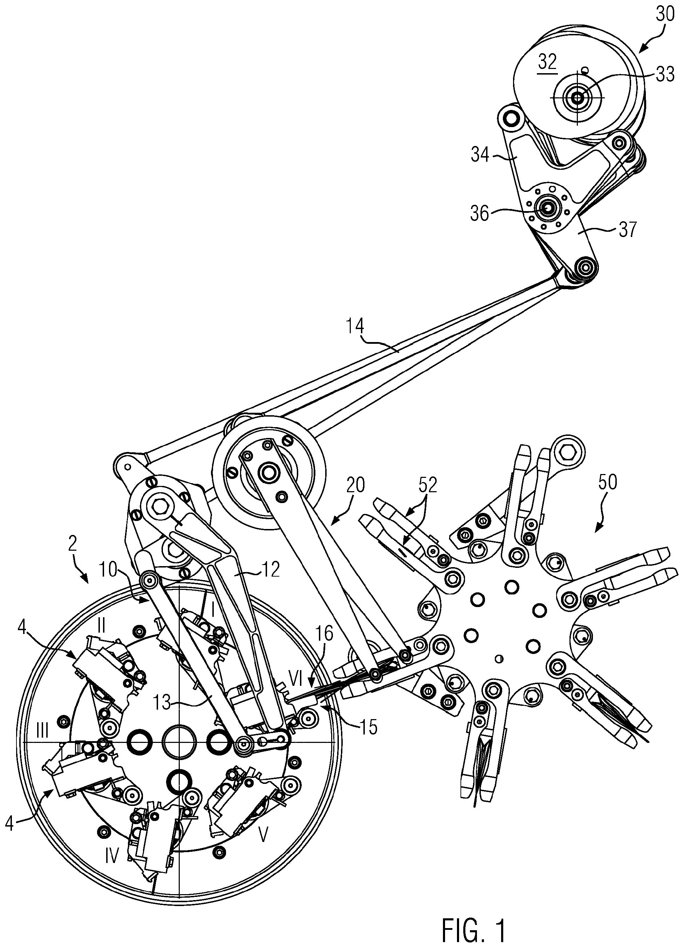

Das in Figur 1 gezeigte Ausführungsbeispiel hat eine mit Bezugszeichen 2 gekennzeichnete Beutelherstellungseinrichtung und eine mit Bezugszeichen 100 gekennzeichnete Siegelstation.

Die Beutelherstellungseinrichtung 2 umfasst ein Karussell mit mehreren um eine Achse drehenden Aufnahmen 4 zum Aufnehmen einer wasserdurchlässigen Umhüllung, die zur Ausbildung des Beutels ein brühfähiges Material enthaltend umgeformt und üblicherweise mit einem Faden und einem Etikett verbunden wird. Bezüglich der einzelnen Stationen und deren Ausgestaltung kann auf den Stand der Technik verwiesen werden, so beispielsweise EP 2 231 479 B1 oder WO 01/62600 A1. Mit den Bezugszeichen I bis VI sind dabei in Figur 1 verschiedene Positionen gekennzeichnet, in denen sich die Aufnahme 4 befinden können, um die unterschiedlichen Komponenten des fertig hergestellten bzw. fertigzustellenden Beutels zu empfangen und zu verarbeiten. Hierbei einwirkende Elemente sind aus Gründen einer klaren Darstellung nicht gezeigt. In Position VI ist der Beutel fertiggestellt.

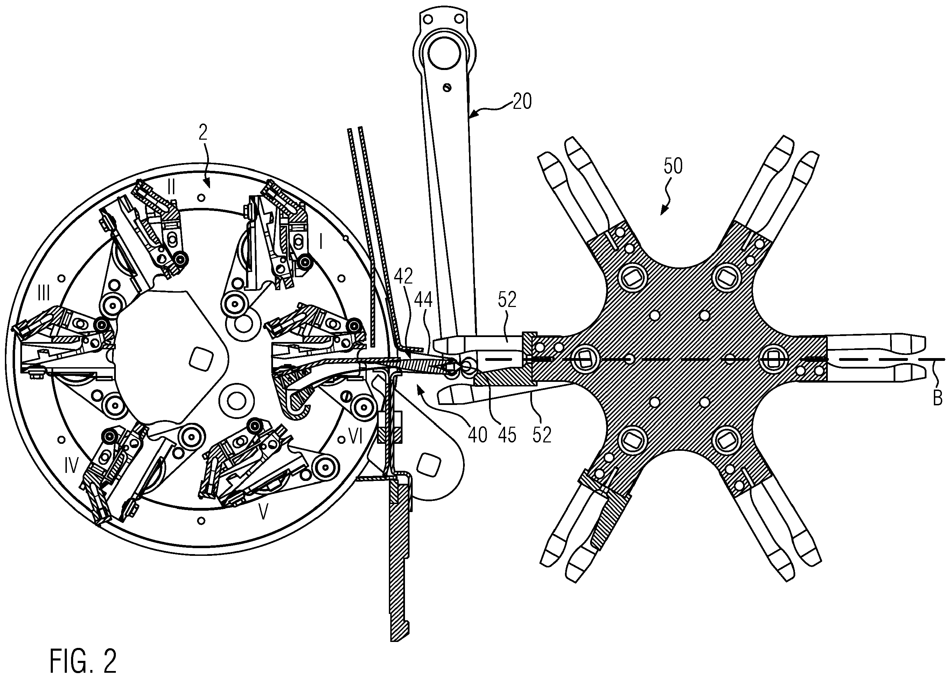

Die Figuren 1 und 2 zeigen Elemente einer mit Bezugszeichen 10 gekennzeichneten Beutelhandhabungseinrichtung und einer mit Bezugszeichen 20 gekennzeichneten Umhüllungsmaterialhandhabungseinrichtung. Bei dem Umhüllungsmaterial des gezeigten Ausführungsbeispiels handelt es sich um eine aromadichte Folie. So wird in der nachstehenden Beschreibung auf eine Folienhandhabungseinrichtung 20 abgestellt. Die Beutelhandhabungseinrichtung 10 umfasst zwei sich in etwa parallel erstreckende Arme 12, 13, die gelenkig miteinander verbunden sind und über Koppelstangen 14 mit einer gemeinsamen Antriebseinrichtung 30 gekoppelt sind. Diese gemeinsame Antriebseinrichtung 30 hat verschiedene Kurvenscheiben 32, die verdrehfest auf einer gemeinsamen Antriebswelle 33 der Antriebseinrichtung 30 befestigt sind und mit Abnehmern 34 gekoppelt sind, in denen die Außenumfangsflächen der Kurvenscheiben 32 jeweils abrollen, wobei die Abnehmer 34 für sich jeweils auf einer gemeinsamen Lagerachse 36 verschwenkbar gelagert und mit einem Hebel 37 versehen sind, der gelenkig mit der zugehörigen Koppelstange 14 verbunden ist. Die Koppelstangen 14 wirken über Hebel auf die Arme 12, 13 ein.

Die Antriebswelle 30 betätigt sowohl die einzelnen Komponenten der Beutelhandhabungseinrichtung 10 wie auch die Komponenten der Folienhandhabungseinrichtung 20. So sind beide Handhabungseinrichtungen 10, 20 mit einem gemeinsamen Antrieb versehen und zwangssynchronisiert.

Wie Figur2 zu entnehmen ist, werden eine in Figur 1 schematisch dargestellte Folie 40 zusammen mit einem Beutel 42 aus der Beutelherstellungseinrichtung 2 heraus und in Richtung auf ein Transportrad 50 abgeschoben, wobei eine durch Falten des Materials der Folie 40 gebildete und zwischen zwei Schenkeln 44 der Folie 40 gebildete Falz 45 vorläuft und der Beutel 42 nachläuft. Die Folienhandhabungseinrichtung 20 greift randseitig an der Folie 40 an. Der Beutel 42 wird von hinten durch Betätigen eines Klemmschuhs 15 mit einer Klemmfeder 16 ausgeschoben, indem der Klemmschuh 15 zusammen mit der Klemmfeder 16 zusammen mit den vorderen Enden der vorderen und hinteren Beutelhandhabungsarme 12, 13 radial von der Beutelherstellungseinrichtung 2 wegbewegt werden. Am Ende dieser Bewegung ist der Beutel 42 in die eingeschlagene Folie 40 gelegt und zwischen Klemmarmen 52 des Transportrades 50 geklemmt.

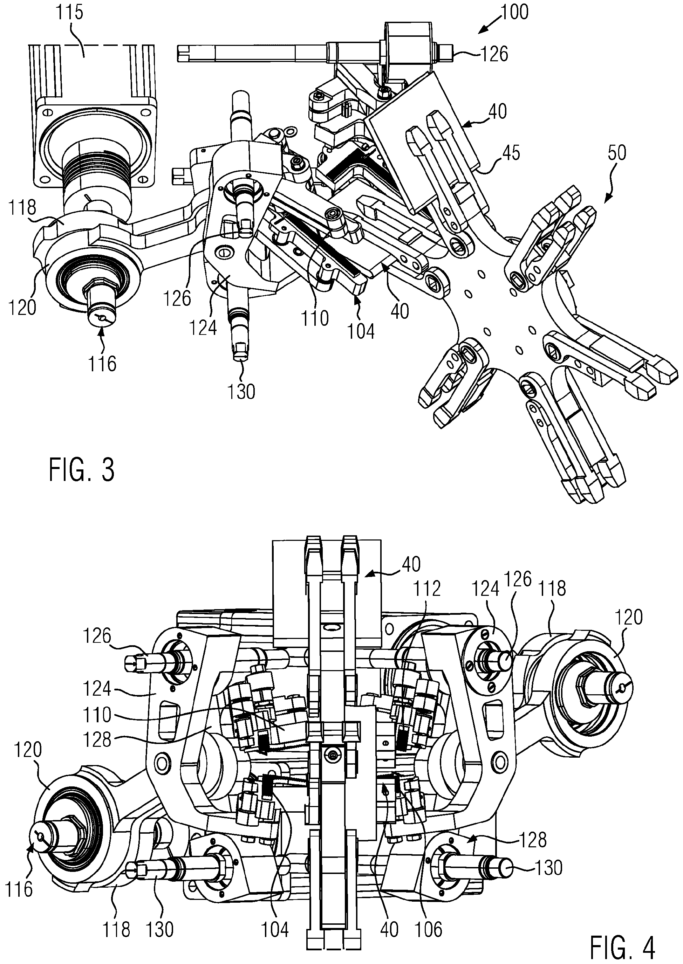

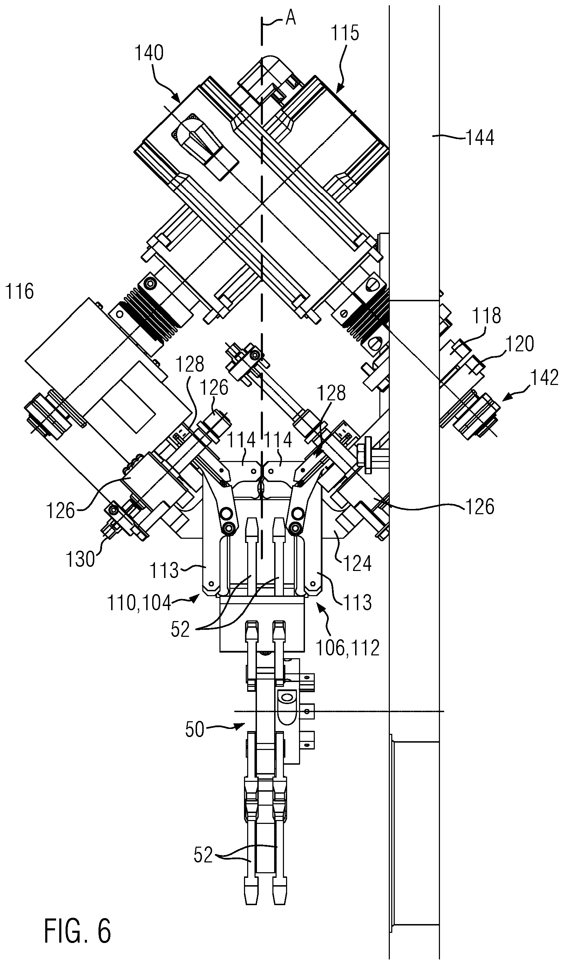

Die Siegelstation 100 hat mit Bezugszeichen 102 und 108 gekennzeichnete Siegelbacken, wobei die in den Figuren 3 bis 9 jeweils unten dargestellte Siegelbacke 102 aus einem ersten Siegelbackenelement 104 und einem zweiten Siegelbackenelement 106 gebildet ist. In gleicher Weise besteht die oberhalb davon dargestellte obere Siegelbacke 108 aus zwei Backenelementen, die nachfolgend als Gegenbackenelemente 110 und 112 bezeichnet werden. Wie insbesondere Figur 6 verdeutlicht, ist jedes Siegelbackenelement 104, 106 in der Draufsicht L-förmig ausgebildet und hat einen langen Schenkel 113 und einen sich rechtwinklig dazu erstreckenden kurzen Schenkel 114. Die langen Schenkel 113 bilden jeweils eine Längssiegelung, durch welche die einander gegenüberliegenden Schenkel 44 an ihrer Längsseite gefügt werden. Die beiden kurzen Schenkel 114 bilden zusammen eine Siegelfläche jeweils der Siegelbacken 102, 103, die zur Ausbildung einer Quersiegelung angepasst ausgebildet ist und diese an der Folie 40 so erzeugt, dass die gegenüberliegend zu der Falz 45 liegende Querseite des Folienmaterials versiegelt wird. Die Längssiegelungen und die Quersiegelungen erlauben einen hermetischen Abschluss des Inneren der Folienverpackung. Die vierte Seite wird durch die Falz 45 verschlossen.

Das Siegelbackenelement 104 und das Gegenbackenelement 110 (jeweils linker Teil der Siegelbacken nach den Figuren 3 bis 9) sind über einen gemeinsamen Antrieb 114 in Form eines Servomotors angetrieben. Hierzu sind exzentrisch zu einer Antriebswelle 116 des Antriebs 114 Pleuel vorgesehen, von denen der benachbart zu dem Antrieb 114 vorgesehene Pleuel der Gegenbacke 110 zugeordnet ist und dementsprechend nachfolgend als Gegenbacken-Pleuel 118 bezeichnet wird, und der andere Pleuel, welcher auf der dem Antrieb 114 gegenüberliegenden Seite des Gegenbacken-Pleuels 118 vorgesehen ist, als Siegelbacken-Pleuel 120 benannt und gekennzeichnet wird.

Dieser Siegelbacken-Pleuel 120 ist frei drehbar und exzentrisch an der Antriebswelle 116 gelagert. Das andere Ende des Siegelbacken-Pleuels 120 ist gelenkig an einem mit Bezugszeichen 122 gekennzeichneten Gelenkpunkt an einem Siegelbacken-Schwenkarm 124 befestigt, der an seinem einen Ende das Siegelbackenelement 104 trägt und an seinem anderen Ende verschwenkbar um eine im Folgenden als Siegelbacken-Schwenkachse bezeichnete Schwenkachse 126 gelagert ist.

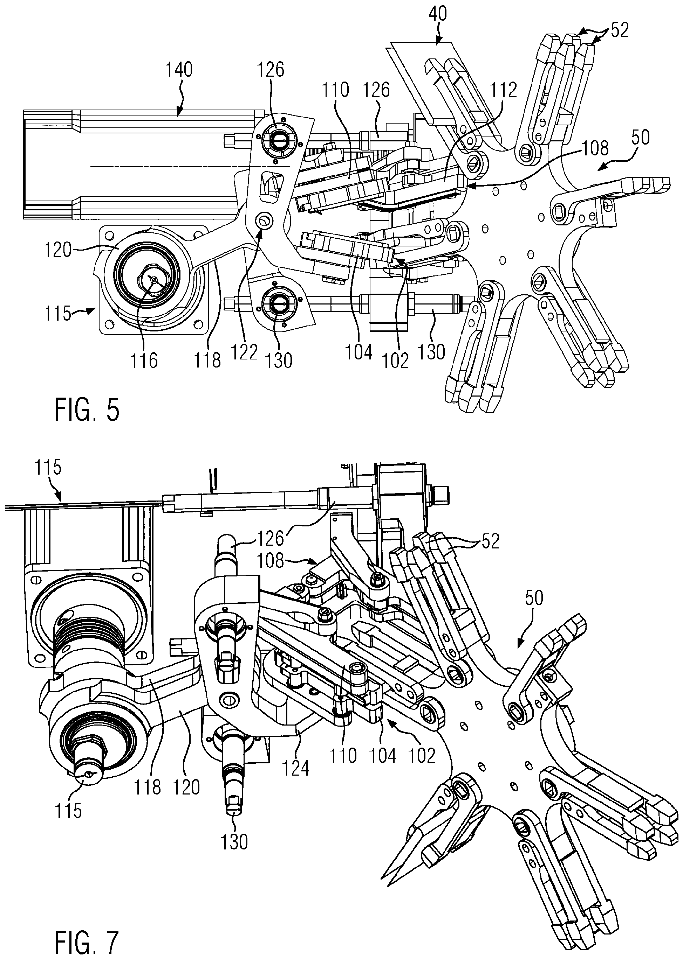

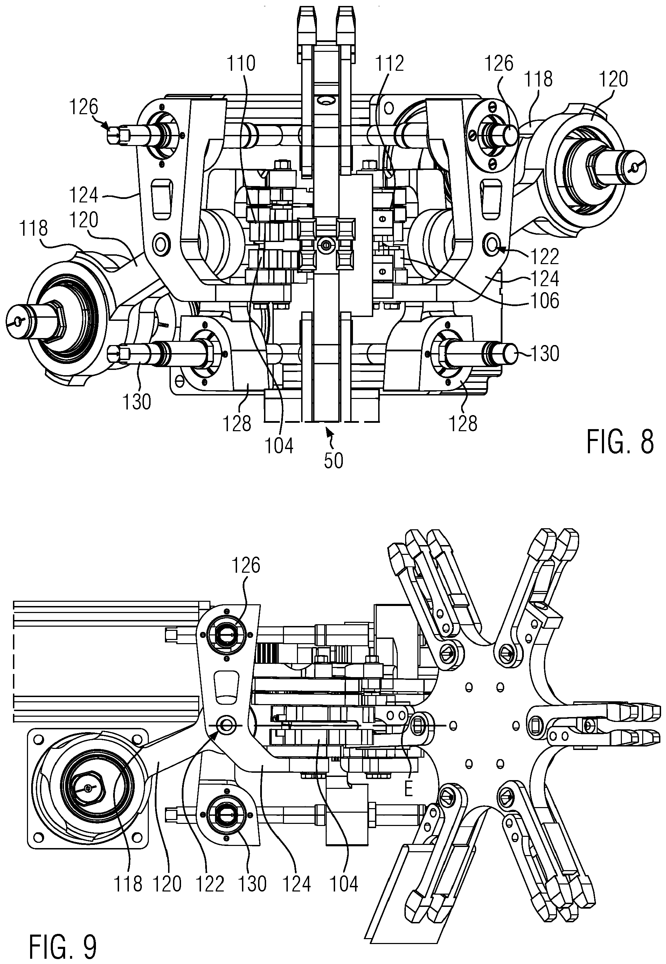

In entsprechender Weise ist der Gegenbacken-Pleuel 118 mit einem Gegenbacken-Schwenkarm 128 gelenkig verbunden, der die Gegenbacke 110 trägt und an seinem gegenüberliegenden Ende an einer Gegenbacke-Schwenkachse 130 verschwenkbar gelagert ist. Unter Bezugnahme auf die Orientierung der Siegelbacken102, 108 gemäß den Darstellungen insbesondere in den Figuren 5 und 9 wird nachstehend mitunter auch auf die obere Siegelbacke 108 und untere Siegelbacke 102 abgestellt. Die untere Siegelbacke 102 besteht aus den unteren Siegelbackenelementen 104, 106. Die obere Siegelbacke 108 besteht aus den oberen Siegelbackenelementen 110, 112.

Die beiden Schwenkachsen 126, 130 sind - wie insbesondere die Seitenansichten nach den Figuren 5 und 9 erkennen lassen -zwischen den Siegelbacken 102, 108 und der Antriebswelle 116 vorgesehen. Eine in Figur 9 mit Bezugszeichen E gekennzeichnete Siegelebene, in der sich die Folie 40 beim Ausbilden der Siegelung befindet, erstreckt sich rechtwinklig zu einer Verbindungslinie, die die beiden Schwenkachsen 126, 130 miteinander verbindet. In etwa auf halbem Weg dieser Strecke befinden sich die Gelenkpunkte, von denen in der Zeichnung lediglich der Gelenkpunkt 122 des Siegelbacken-Pleuels 120 zu erkennen ist.

In der zuvor beschriebenen Weise sind auch die in Figur 4 jeweils rechts zu erkennenden Elemente zum Siegeln der Folie 40, nämlich das Siegelbackenelement 106 und das Gegenbackenelement 112 abgestützt und beweglich gelagert. Wie insbesondere die Figur 6 erkennen lässt, sind zwei Antriebe 115, 140 vorgesehen, deren Antriebswellen 116, 142 sich rechtwinklig zueinander erstrecken. Die Antriebe 115, 140 sind sich überdeckend vorgesehen, wodurch ein relativ kompakter Aufbau gegeben ist. Die wesentlichen Komponenten der Siegelstation 100 sind im Grunde gespiegelt um eine Achse A spiegelbildlich angeordnet, wobei die Achse A den Schnittpunkt der beiden Antriebswellen 116, 152 schneidet, die Trennung zwischen den kurzen Schenkeln 114 durchsetzt und sich rechtwinklig zu einer Drehachse des Transportrades 50 erstreckt.

Wie sich aus der vorstehenden Beschreibung ergibt, sind für das erste und zweite Paar von Siegelbackenelementen 104, 110; 106, 112 jeweils Kniehebel vorgesehen, wobei der Kniehebel zu dem Siegelbackenelement 104 den Siegelbacken-Pleuel 120 aufweist und der Kniehebel zu dem Gegenbackenelement 110 den Gegenbacken-Pleuel 118 umfasst. Dabei sind die beiden Pleuel 118, 120 um die gemeinsame Antriebswelle 116 drehbar gelagert und von dieser abgestützt. Sie sind exzentrisch zu dieser Antriebswelle 116 gelagert. Die Exzenter sind aber winkelig gegeneinander versetzt.

Die Figuren 3 bis 5 zeigen eine Phase beim Betrieb der Siegelstation 100 vor dem Einbringen der in den Figuren 3 bis 5 oberen Folie 40 zwischen die Siegelbacken 102, 108. Die Siegelbacken 102, 108 sind offen. Spezifisch sind die Siegelbackenelemente in der Ansicht gemäß Figur 4 das Siegelbackenelement 104 nach unten und nach links, das Siegelbackenelement 106 nach unten und nach rechts, das Gegenbackenelement 110 nach oben und nach links und das Gegenbackenelement 112 nach oben und nach rechts verschwenkt. Diese Schwenkbewegung wird durch die jeweiligen Kniehebel bewirkt. Wie Figur 5 verdeutlicht, befinden sich die größeren Radien der jeweiligen Exzenter zu dem jeweiligen Pleuel 118, 120 auf der den Siegelbacken 102, 108 gegenüberliegenden Seite der Antriebswelle 116. Die langen Schenkel 113 verlaufen parallel zu dieser Achse 1, die kurzen Schenkel 114 rechtswinklig dazu, die Schwenkachsen 126, 130 sind jeweils 45° geneigt dazu. Die Schwenkarme 124, 128 sind dementsprechend nahezu maximal in Richtung auf die Antriebswelle 116 verschwenkt. Der zwischen den Siegelbacken 102, 108 gegebenen Freiraum erlaubt das Einbringen der gefalteten Folie 40, ohne dass diese mit den Siegelbacken 102, 108 kollidiert. Dieses Einbringen erfolgt durch Drehung des Transportrades 50. Die Drehung wird gestoppt, wenn die gefaltete Folie 40 die Siegelebene E erreicht hat. Während der Annäherung der Folie 40 an diese Siegelebene E werden bereits die Siegelbacken 102, 108 durch Drehung der Antriebswelle 116 im Uhrzeigersinn nach den Figuren 5 und 9 geschlossen. Es wird auf die in diesen Figuren mit Bezugszeichen 116 gekennzeichnete Antriebswelle abgestellt. Die andere Antriebswelle 142 wird dabei gegensinnig angetrieben.

Die Siegelposition ist in den Figuren 6 bis 9 dargestellt. Die Siegelbacken 102, 108 liegen aneinander an. Spezifisch liegt das Siegelbackenelement 104 an dem Gegenbackenelement 110 und das Siegelbackenelement 106 an dem Gegenbackenelement 112 an. So ist jedes Paar voneinander zugeordneten Backenelementen 104, 110; 106, 112 unter Einschluss der Folie 40 geschlossen. Auch berühren sich die kurzen Schenkel 114 der jeweiligen Backenelemente 104, 106, 110, 112.

Wie insbesondere Figur 9 verdeutlicht, befindet sich der Siegelbacken-Pleuel 120, das der unteren Siegelbacke 102 zugeordnet ist, in seiner Strecklage. Eine den Gelenkpunkt 122 und die Antriebswelle 116 schneidende Gerade durchsetzt dementsprechend den mit der Antriebswelle 116 verdrehfest verbundenen Exzenter in seinem maximalen Radius. Der Siegelbacken-Pleuel 120 ist dementsprechend allein radial und durch die Lagerung der Antriebswelle 116 abgestützt.

Der Gegenbacken-Pleuel 118 hingegen befindet sich in Drehrichtung der Antriebswelle 116 bis Erreichen der Siegelposition noch vor seiner Strecklage, und zwar etwas 30° vor seiner Strecklage. Mit anderen Worten hat das jeweilige Siegelbackenelement 104, 106 bereits seine maximal mögliche Höchstlage (bezogen auf die Darstellung nach Figur 9) erreicht, während die Drehung der Antriebswelle 116 im Uhrzeigersinn zu einer weiteren erheblichen Annäherung des Gegenbackenelements 110 führt. Das von dem Servomotor als Antrieb 115 aufgebrachte Drehmoment bestimmt bei dem gezeigten Ausführungsbeispiel die Anpresskraft zwischen den beiden Backenelementen 104, 110 bzw. 106, 112. Das an dem Antrieb 115 abgegriffene Drehmoment wird zur Einstellung der Anpresskraft verwendet. Das Drehmoment entspricht exakt der Anpresskraft. Insbesondere fehlt es an Federn oder anderen Kompressionsmitteln zwischen dem Antrieb 115 und den gegeneinander liegenden Siegelflächen der einzelnen Backenelemente 104, 106, 110, 112. Da sich das Siegelbackenelement in der Strecklage des entsprechenden Kniehebels befindet und dementsprechend die Last über den zugehörigen Siegelbacken-Pleuel 120 allein radial auf die Antriebswelle abgetragen wird, wird das über die Motorleistung abzugreifende Moment allein durch die Anpresskraft des Gegenbackenelements 110 bestimmt, wodurch die Steuerung der Anpresskraft über den Servomotor vereinfacht und präzisiert ist.

Figur 6 verdeutlich auch die Lage der Komponenten der Siegelstation 100 relativ zu einer Wand 144 einer Maschine, die an ihrer Außenseite (In Figur 6 links) üblicherweise die einzelnen Stationen mit ihren funktionalen und mit dem Beutel oder dem Beutelmaterial, einem Etikett oder einem Faden zum Verbinden des Beutelmaterials mit dem Faden zusammenwirken Komponenten freilegt. An der Außenseite der Wand 144 kann auch der Bediener der Vorrichtung nach Öffnen einer in der Regel zumindest teilweise transparenten Tür, die die Komponenten abgedeckt, auf diese zum Rüsten der Maschine bzw. zur Behebung von Störungen zugreifen. Hinter der Wand 144 liegt üblicherweise das Getriebe bzw. der Motor der Maschine. Ersichtlich durchsetzt die Antriebswelle 142 und die damit verbundenen Pleuel 118, 129 diese Trennwand 144.

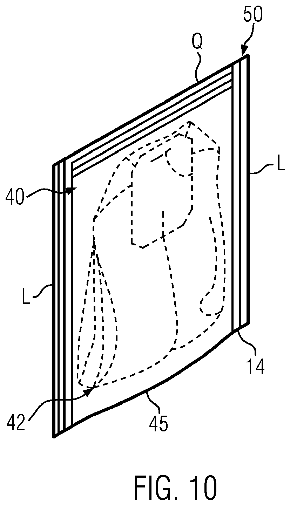

Figur 10 verdeutlicht die in der zuvor beschriebenen Weise Verpackung bestehend aus einer mit Bezugszeichen 150 gekennzeichneten Umhüllung, die als umfängliche Umhüllung den punktiert dargestellten Beutel 42 mit Faden und Etikett in sich aufnimmt und aromadicht einschließt. Die Umhüllung 150 hat eine erste Breitseite, die durch die Falz 45 verschlossen ist. Von dieser Falz gehen rechtwinklig Längssiegelungen L ab. Am Ende dieser Längssiegelungen L befindet sich eine Quersiegelung Q, die parallel zu der Falz 45 verläuft. Die Längs- und Quersiegelungen L, Q gehen ineinander über bzw. durchsetzen sich.

### Bezugszeichenliste

- 2: Beutelherstellungseinrichtung
- 4: Aufnahme
- 10: Beutelhandhabungseinrichtung
- 12: vorderer Beutelhandhabungsarm
- 13: hinterer Beutelhandhabungsarm
- 14: Koppelstange
- 15: Klemmschuh
- 16: Klemmfeder
- 20: Folienhandhabungseinrichtung
- 30: Antriebseinrichtung
- 32: Kurvenscheibe
- 33: Antriebswelle
- 34: Abnehmer
- 36: Lagerachse
- 37: Hebel
- 40: Folie
- 42: Beutel
- 44: Schenkel
- 45: Falz
- 50: Transportrad
- 52: Klemmarm
- 100: Siegelstation
- 102: untere Siegelbacke
- 104: Siegelbackenelement
- 106: Siegelbackenelement
- 108: obere Siegelbacke
- 110: Gegenbackenelement
- 112: Gegenbackenelement
- 113: langer Schenkel
- 114: kurzer Schenkel
- 115: Antrieb
- 116: Antriebswelle
- 118: Gegenbacken-Pleuel
- 120: Siegelbacken-Pleuel
- 122: Gelenkpunkt
- 124: Siegelbacken-Schwenkarm
- 126: Siegelbacken-Schwenkachse
- 128: Gegenbacken-Schwenkarm
- 130: Gegenbacken-Schwenkachse
- 140: Antrieb
- 142: Antriebswelle
- 144: Wand
- 150: Umhüllung
- A: Symmetrie-Achse
- E: Siegelebene
- L: Längssiegelung
- Q: Quersiegelung
- I-VI: Position der Aufnahme 4

## Patentansprüche

1. Vorrichtung zum Herstellen eines in einer Umhüllung (150) aufgenommenen, ein brühfähiges Material enthaltenden Beutels (42) mit einer Beutelherstellungseinrichtung (2), die dazu eingerichtet ist, einen wasserdurchlässigen Beutel (42) enthaltend brühfähiges Material herzustellen, und mit einer Siegelstation (100) mit zwei relativ zueinander beweglichen Siegelbacken (102; 104) zum Einsiegeln des Beutels (42) in der U-förmig um den Beutel (42) gelegten Umhüllung (150), wobei die Siegelbacken (102; 108) zur Ausbildung von einander gegenüberliegenden Längssiegelungen (L) und einer sich dazu quer erstreckenden Quersiegelung (Q) an der Umhüllung (150) ausgebildet sind,
**dadurch gekennzeichnet,**
**dass** zumindest eine Siegelbacke (102; 108) ein erstes und ein zweites Siegelbackenelement (104, 106; 110, 112) aufweist, die jeweils zur Ausbildung einer der Längssiegelungen (L) und eines Teilstücks der Quersiegelung (Q) ausgebildet sind.

2. Vorrichtung nach Anspruch 1, **dadurch gekennzeichnet, dass** das erste oder das zweite Siegelbackenelement (104, 106; 110, 112) an einem Siegelbacken-Schwenkarm (124) befestigt ist, dessen Schwenkachse (126) schräg zu den Längssiegelungen (L) und der Quersiegelung (Q) ausgerichtet ist.

3. Vorrichtung nach Anspruch 1 oder 2, **dadurch gekennzeichnet, dass** der Siegelbacken-Schwenkarm (124) über ein Pleuel (120) exzentrisch mit einer Antriebswelle (116) verbunden ist, die parallel zu der Schwenkachse (124) ausgerichtet ist.

4. Vorrichtung nach einem der vorherigen Ansprüche, **dadurch gekennzeichnet, dass** dem ersten oder dem zweiten Siegelbackenelement (104, 106, 110, 112) zur Verpressung der Umhüllung (150) ein mit dem Siegelbackenelement (104, 106) zusammenwirkendes Gegenbackenelement (110, 112) zugeordnet ist und dass das Siegelbackenelement (104, 106) über einen Siegelbacken-Pleuel (120) und das Gegenbackenelement (104, 106) über einen Gegenbacken-Pleuel (118) jeweils exzentrisch mit einer gemeinsamen Antriebswelle (116) verbunden sind.

5. Vorrichtung nach einem der vorherigen Ansprüche, **dadurch gekennzeichnet, dass** dem ersten oder dem zweiten Siegelbackenelement (104, 106) zur Verpressung der Umhüllung (150) ein mit dem Siegelbackenelement (104, 106) zusammenwirkendes Gegenbackenelement (110, 112) zugeordnet ist, das an einem Gegenbacken-Schwenkarm (128) befestigt ist, dessen Schwenkachse (130) schräg zu den Längssiegelungen (L) und der Quersiegelung (Q) ausgerichtet ist, dass die Schwenkachse (126) des Siegelbacken-Schwenkarms (128) und die Schwenkachse (130) des Gegenbacken-Schwenkarms (128) auf gegenüberliegenden Seiten von Gelenkpunkten (122) angeordnet sind, an denen ein Siegelbacken-Pleuel (120) an einem Siegelbacken-Schwenkarm (124) bzw. ein Gegenbacken-Pleuel (118) an einem Gegenbacken-Schwenkarm (120) angreift, und dass der Siegelbacken-Pleuel (118) und der Gegenbacken-Pleuel jeweils exzentrisch mit einer gemeinsamen Antriebswelle (116) verbunden sind.

6. Vorrichtung nach einem der vorherigen Ansprüche, **gekennzeichnet dadurch** zwei Antriebswellen (116, 152), die jeweils von einer Antriebeinheit (115, 140) angetrieben und zum Antrieb jeweils eines der Siegelbackenelemente (104; 106) und eines mit dem jeweiligen Siegelbackenelement (104; 106) zur Verpressung der Umhüllung (150) zusammenwirkenden Gegenbackenelementes (110; 112) vorgesehen und rechtwinkelig zueinander ausgerichtet sind.

7. Vorrichtung nach einem der vorherigen Ansprüche, **dadurch gekennzeichnet, dass** sowohl das erste und als auch das zweite Siegelbackenelement (110, 110) und/oder ein jeweils mit dem Siegelbackenelement zusammenwirkendes erste und zweites Gegenbackenelement (106, 112) gemäß einem der Ansprüche 2 bis 5 weitergebildet sind.

## Claims

1. Device for manufacturing a pouch (42) containing a brewable material accommodated in a wrapping (150), comprising a pouch manufacturing device (2) adapted to manufacture a water-permeable pouch (42) containing brewable material, and comprising a sealing station (100) with two sealing jaws (102; 104) movable relative to one another for sealing the pouch (42) in the wrapping (150) placed in a U-shape around the pouch (42), wherein the sealing jaws (102; 108) are configured to form longitudinal seals (L) lying opposite one another and a transverse seal (Q) extending transversely thereto on the wrapping (150),
**characterized in that,**
at least one sealing jaw (102; 108) comprises first and second sealing jaw elements (104, 106; 110, 112) each configured to form one of the longitudinal seals (L) and a segment of the transverse seal (Q).

2. Device according to claim 1, **characterized in that** the first or the second sealing jaw element (104, 106; 110, 112) is fixed to a sealing jaw pivot arm (124), the pivot axis (126) of which is aligned obliquely to the longitudinal seals (L) and the transverse seal (Q).

3. Device according to claim 1 or 2, **characterized in that** the sealing jaw pivot arm (124) is eccentrically connected via a connecting rod (120) to a drive shaft (116) which is aligned parallel to the pivot axis (124).

4. Device according to one of the preceding claims, **characterized in that** a counter jaw element (110, 112) cooperating with the sealing jaw element (104, 106) is assigned to the first or the second sealing jaw element (104, 106; 110, 112) for pressing the wrapping (150) and **in that** the sealing jaw element (104, 106) is connected via a sealing jaw connecting rod (120) and the counter jaw element (110, 1112) is connected via a counter jaw connecting rod (118) in each case eccentrically to a common drive shaft (116).

5. Device according to one of the preceding claims, **characterized in that** assigned to the first or the second sealing jaw element (104, 106) for pressing the wrapping (150) is a counter jaw element (110, 112) interacting with the sealing jaw element (104, 106), which counter jaw element (110, 112) is attached to a counter jaw pivot arm (128), the pivot axis (130) of which is aligned obliquely with respect to the longitudinal seals (L) and the transverse seal (Q), **in that** the pivot axis (126) of the sealing jaw pivot arm (128) and the pivot axis (130) of the counter jaw pivot arm (128) are arranged on opposite sides of pivot points (122) at which a sealing jaw connecting rod (120) engages on a sealing jaw pivot arm (124) or a counter jaw connecting rod (118) engages on a counter jaw pivot arm (120), and **in that** the sealing jaw connecting rod (118) and the counter jaw connecting rod are each connected eccentrically to a common drive shaft (116).

6. Device according to one of the preceding claims, **characterized in that** two drive shafts (116, 152), each driven by a drive unit (115, 140) and each provided for driving one of the sealing jaw elements (104; 106) and a counter jaw element (110; 112) interacting with the respective sealing jaw element (104; 106) for pressing the wrapping (150), are aligned at right angles to one another.

7. Device according to one of the preceding claims, **characterized in that** both the first and the second sealing jaw element (104, 106) and/or a respective first and second counter jaw element (110, 112) cooperating with the sealing jaw element are further developed according to one of claims 2 to 5.

## Revendications

1. Dispositif de fabrication d'une poche (42) reçue dans une enveloppe (150) et contenant un matériau infusable, avec un dispositif de fabrication de poche (2) qui est conçu pour produire une poche perméable à l'eau (42) contenant un matériau infusable, et avec un poste de scellement (100) avec deux mâchoires de scellement (102 ; 104) mobiles l'une par rapport à l'autre afin de sceller la poche (42) dans l'enveloppe (150) en forme de U autour de la poche (42), dans lequel les mâchoires de scellement (102 ; 108) sont réalisées pour former des joints longitudinaux (L) mutuellement opposés et un joint transversal (Q) s'étendant transversalement à celui-ci est formé sur le boîtier (150),
**caractérisé en ce que,**
au moins une mâchoire de scellement (102 ; 108) présente un premier et un second élément de mâchoire de scellement (104, 106; 110, 112), qui sont conçus chacun pour former l'un des joints longitudinaux (L) et d'une section du joint transversal (Q).

2. Dispositif selon la revendication 1, **caractérisé en ce que** le premier ou le second élément de mâchoire de scellement (104, 106 ; 110, 112) est fixé à un bras de pivotement de mâchoire de scellement (124) dont l'axe de pivotement (126) est orienté incliné vers les joints longitudinaux (L) et le joint transversal (Q) sont alignés.

3. Dispositif selon la revendication 1 ou 2, **caractérisé en ce que** le bras de pivotement (124) de la mâchoire de scellement est relié de manière excentrée par l'intermédiaire d'une biellette (120) à un arbre d'entraînement (116) qui est orienté parallèlement à l'axe de pivotement (124).

4. Dispositif selon l'une quelconque des revendications précédentes, **caractérisé en ce que** le premier ou le second élément de mâchoire de scellement (104, 106, 110, 112) est associé à un élément de mâchoire antagoniste (110, 112) qui coopère avec l'élément de mâchoire de scellement (104, 106) pour presser l'enveloppe (150) et **en ce que** l'élément de mâchoire de scellement (104, 106) est relié de manière excentrée à un arbre d'entraînement commun (116) par l'intermédiaire d'une biellette de mâchoire de scellement (120) et à l'élément de mâchoire antagoniste (104, 106) par l'intermédiaire d'une biellette de mâchoire de scellement (118).

5. Dispositif selon l'une des revendications précédentes, **caractérisé en ce que** le premier ou le second élément de mâchoire de scellement (104, 106) pour presser l'enveloppe (150) est associé à un élément de mâchoire antagoniste (110, 112) coopérant avec l'élément de mâchoire de scellement (104, 106), qui est fixé à un bras de pivotement de mâchoire antagoniste (128) dont l'axe de pivotement (130) est orienté incliné par rapport aux joints longitudinaux (L) et au joint transversal (Q), **en ce que** l'axe de pivotement (126) du bras de pivotement de mâchoire de scellement (128) et l'axe de pivotement (130) du bras de pivotement de mâchoire antagonistes (128) sont disposés sur des côtés opposés des points de pivotement (122) au niveau desquels une biellette de mâchoire de scellement (120) sur un bras de pivotement de mâchoire de scellement (124) ou une biellette de mâchoire antagoniste (118) sur un bras pivotant de mâchoire de scellement (120) vient en prise, et en que la biellette de mâchoire de scellement (118) et la biellette de mâchoire antagoniste sont chacune reliées de manière excentrique à un arbre d'entraînement commun (116).

6. Dispositif selon l'une quelconque des revendications précédentes, **caractérisé en ce que** deux arbres d'entraînement (116, 152) entraînés chacun par une unité d'entraînement (115, 140) et servant à entraîner l'un des éléments de mâchoire de scellement (104 ; 106) et l'un des éléments de mâchoire antagoniste (110 ; 112) associé à l'élément de mâchoire de scellement respectif (104 ; 106) pour presser l'enveloppe (150) (110 ; 112) sont prévus et orientés à angle droit l'un par rapport à l'autre.

7. Dispositif selon l'une quelconque des revendications précédentes, **caractérisé en ce que** tant le premier que le second élément de mâchoire de scellement (110, 110) et/ou un premier et second élément de mâchoire antagoniste (106, 112) coopérant chacun avec l'élément de mâchoire de scellement respectif sont formés selon l'une des revendications 2 à 5.
